# EUROPÄISCHE PATENTSCHRIFT

(11) **EP 3 244 154 B1**
(45) Veröffentlichungstag und Bekanntmachung des Hinweises auf die Patenterteilung: **22.04.2020**
(21) Anmeldenummer: 17156954.4
(22) Anmeldetag: 20.02.2017
(51) Int. Cl.: F28D 7/16, F28F 9/02, F25B 39/02, F02K 9/44, B64G 1/40, F28F 9/18, F28F 9/16, F02K 9/40, F25B 19/00, F28D 21/00

(54) **EINSPRITZUNG IN ROHRE EINES ROHRBÜNDELWÄRMETAUSCHERS**
INJECTION IN TUBES OF A TUBULAR HEAT EXCHANGER
INJECTION DANS DES TUBES D'UN ÉCHANGEUR THERMIQUE TUBULAIRE

(30) Priorität: 24.02.2016 DE 102016103229
(43) Veröffentlichungstag der Anmeldung: 15.11.2017
(73) Patentinhaber: ArianeGroup GmbH, 82024 Taufkirchen (DE)
(72) Erfinder: Isselhorst, Armin, 28199 Bremen (DE)
(74) Vertreter: Marschall, Stefan

(56) Entgegenhaltungen:
- EP-A1- 0 105 442
- EP-A1- 2 693 033
- EP-A2- 0 870 999
- WO-A1-97/33078
- DE-A1- 2 502 181
- GB-A- 1 288 166
- US-A- 3 540 529
- US-A- 5 101 892

## Beschreibung

Die vorliegende Erfindung betrifft ein Einspritzelement für einen Rohrbündelwärmetauscher, einen Rohrbündelwärmetauscher mit einem Einspritzelement, ein Versorgungssystem für eine Triebwerk mit Treibstoff und ein Verfahren zum Kühlen von Treibstoff für ein Triebwerk.

Rohrbündelwärmetauscher dienen einer Temperaturübertragung zwischen einem wärmeren und einem kälteren Fluid, von denen ein erstes durch ein Rohrbündel mit einer Mehrzahl an Rohren geleitet wird, während das zweite Fluid die Mehrzahl an Rohren umströmt. Diese Rohre sind dazu im Inneren eines Außenrohrs angeordnet und bestehen mindestens teilweise aus einem Material mit hoher Wärmeleitfähigkeit.

In der Druckschrift US 5 101 892 A ist ein Rohrbündelwärmetauscher mit einer Mehrzahl an Rohren offenbart, die jeweils an einem Durchlass eines Einspritzelements angeschweißt sind. Der Durchlass kann dabei eine sich verengende Ausprägung haben.

Insbesondere können Rohrbündelwärmetauscher zur Kühlung eingesetzt werden, indem das erste Fluid kälter ist als das zweite. Um dies zu erreichen, kann das erste Fluid einem Verdampfungsprozess unterzogen werden, z.B. indem durch Durchleitung dieses Fluids durch ein Expansionsventil oder durch eine Drosselung zur Druckminderung unter den Siedepunkt des Fluids ein Übergang von der flüssigen in die gasförmige Phase bewirkt wird.

Beispielsweise in einer Kompressionskältemaschine wird das gasförmige Fluid in einem Kreislauf alsdann wiederum zu einer Flüssigkeit komprimiert und kann dann erneut verdampft werden. Ein dafür nötiger Kompressor benötigt jedoch eine Energiezufuhr und hat zudem ein Gewicht, das in bestimmten Anwendungsbereichen nachteilig sein kann. Beispielsweise in der Flug- oder Weltraumtechnik kann das Mitführen einer zusätzlichen Kompressor-Kühlanlage gesamtenergetisch nicht sinnvoll sein.

Im Bereich der Raketentechnik kann beispielsweise eine Treibstoffkühlung zur Vermeidung von Kavitationen und im Sinne einer gleichmäßigen Verbrennung des Treibstoffs erforderlich sein. Durch Druckentlastung am Tank selbst wird herkömmlich häufig ein Teil des Treibstoffs ins Weltall abgelassen und so die Temperatur des verbleibenden Tankinhalts gesenkt. Durch den Verzicht auf einen Kreislauf wie oben geschildert geht zwar der abgelassene Treibstoff auf diese Weise verloren, doch es kann auf ein Mitführen eines Kompressors, einer zusätzlichen Stromquelle und eines Kondensators zur Wärmeabstrahlung in den Weltraum verzichtet werden.

Allerdings erfordert die Druckentlastung eine Wiederbedrückung des Tanks, für die wiederum ein Bedrückungsgas mitgeführt werden muss, was mit energetischem Aufwand verbunden ist.

Die vorliegende Erfindung hat die Aufgabe, eine Technik bereitzustellen, mit der die oben genannten Nachteile vermieden werden können und die insbesondere eine verlustarme und energiesparende Kühlung von Treibstoff ermöglicht.

Die Aufgabe wird gelöst durch ein Einspritzelement für einen Rohrbündelwärmetauscher gemäß Anspruch 1, einen Rohrbündelwärmetauscher gemäß Anspruch 4, ein Versorgungssystem für eine Triebwerk mit Treibstoff gemäß Anspruch 6 und ein Verfahren zum Kühlen von Treibstoff für ein Triebwerk gemäß Anspruch 7. Vorteilhafte Ausführungsformen werden in den Unteransprüchen, der Beschreibung und den Figuren offenbart.

Ein erfindungsgemäßes Einspritzelement für einen Rohrbündelwärmetauscher weist zum Aufteilen eines Fluidstroms in eine Mehrzahl an Fluidströmen eine entsprechende Mehrzahl an Durchlässen auf, die sich zu einer Seite des Einspritzelements hin jeweils kegelartig verengen; als "kegelartig" wird dabei in dieser Schrift eine Verengung bezeichnet, deren Durchmesser - ausgehend von der anderen Seite des Einspritzelements - zu der genannten Seite hin kontinuierlich oder in mehreren Schritten immer kleiner wird. Eine exakte mathematische Kegelform ist dafür nicht zwingend erforderlich. Eine jeweilige zentrale Achse der Durchlässe verläuft jeweils schräg durch das Einspritzelement.

Ein derartiges erfindungsgemäßes Einspritzelement ist vorzugsweise in einem Eingangsbereich eines Rohrbündels des Rohrbündelwärmetauschers positionierbar bzw. positioniert, so dass also durch die Durchlässe im Einspritzelement hindurch Fluid in das Rohrbündel geleitet werden kann. Die Mehrzahl an Durchlässen entspricht dabei vorzugsweise einer Anzahl an Rohren des Rohrbündels, so dass das Fluid vorzugsweise jeweils durch einen Durchlass in ein zugehöriges Rohr des Rohrbündels eingeleitet bzw. eingespritzt werden kann. Die Seite, zu der hin sich die Durchlässe kegelartig verengen, ist in einer derartigen Position vorzugsweise den Rohren des Rohrbündels zugewandt. An der engsten Stelle eines jeden Durchlasses tritt ein hindurchgeleitetes Fluid somit vorzugsweise in ein zugehöriges Rohr ein.

Die kegelartige Verengung der Durchlässe ermöglicht eine genaue Steuerung des Drucks und des Massenstroms eines durchgeleiteten Fluids. Insbesondere kann eine Druckentlastung punktgenau an der jeweils engsten Stelle am - in Durchflussrichtung - Ende des Durchlasses bewirkt werden. Diese engste Stelle wirkt dabei als Einspritzblende, an der eine resultierende Entspannung des Flüssiggases vorzugsweise für dessen Übergang in gasförmigen Aggregatzustand sorgt, wohingegen eine vorzeitige Verdampfung durch die kegelartige Form verhindert wird.

Insbesondere vorteilhaft sind Ausführungsformen, bei denen der Durchmesser der Durchlässe an ihrer engsten Stelle jeweils im Bereich von 0,1 mm bis 0,6 mm liegt, bevorzugter im Bereich von 0,2 mm bis 0,4 mm.

Vorteilhaft ist eine Ausführungsvariante, bei der einander gegenüberliegende Wandabschnitte der sich jeweils kegelartig verengenden Durchlässe in einer Querschnittsebene in einem Winkel von 20° bis 50°, bevorzugter von 25° bis 40° (in Richtung der Verengung) aufeinander zulaufen; die Querschnittsebene umfasst dabei vorzugsweise neben den gegenüberliegenden Wandabschnitten eine zentrale Achse des jeweiligen Durchlasses. Der Winkel kann dabei somit entlang gegenüberliegenden Linien gemessen werden, die mit der zentralen Achse des jeweiligen Durchlasses in einer Ebene liegen. Bei kontinuierlicher Verengung entlang einer Kegelmantelfläche ist der besagte Winkel somit der Öffnungswinkel des zugehörigen Kegels, bei einer Verengung in Stufen entspricht der Winkel vorzugsweise einer (berechneten) mittleren kontinuierlichen Verengung.

Gemäß einer vorteilhaften Ausführungsform ist ein erfindungsgemäßes Einspritzelement als Scheibe ausgebildet oder umfasst zumindest einen scheibenförmigen Bereich, durch die bzw. den hindurch Durchlässe führen. Ein derartiges Einspritzelement lässt sich besonders leicht fertigen und in einen Rohrbündelwärmetauscher einsetzen, beispielsweise zwischen einer Einspritzkuppel und den Rohren des Rohrbündels. Eine derartige Scheibe hat vorzugsweise eine im Wesentlichen gleichmäßige Dicke in einem Bereich von 1mm bis 8mm, bevorzugter von 2mm bis 4mm.

Vorzugsweise sind die Durchlässe (bzw. ihre Wandungen) jeweils rotationssymmetrisch ausgebildet. Sie können Bohrungen im Einspritzelement sein, die beispielsweise mit Hilfe eines kegelförmigen Bohrerkopfs gefertigt sein bzw. werden können. Dabei kann über die Bohrtiefe ein beabsichtigter vorteilhafter Durchmesser der engsten Stelle (Einspritzblende) eines Durchlasses erzeugt werden.

Gemäß einer bevorzugten Ausführungsform der vorliegenden Erfindung verläuft die jeweilige zentrale Achse der Durchlässe (die im Falle einer rotationssymmetrischen Form des jeweiligen Durchlasses entsprechend mit einer Rotationsachse übereinstimmt) vorzugsweise schräg gegenüber einer Oberfläche des Einspritzelements, zu der hin sich die Durchlässe verengen.

Besonders bevorzugt ist dabei eine Ausführungsform, bei der die jeweilige zentrale Achse der Durchlässe eine ebene Oberfläche des Einspritzelements unter einem Winkel von 75° bis 87° schneidet; bei Verwendung des Einspritzelements im Wärmetauscher ergibt sich vorzugsweise eine Neigung der zentralen Achse gegenüber den (z.B. senkrecht auf die Oberfläche des Einspritzelementes aufsetzenden) Rohren um 3° bis 15°.

Eine derartige Neigung ermöglicht eine Verwirbelung bzw. einen Drall in einem durch das Einspritzelement in die Rohre geleiteten Fluid. Dies kann eine längere Verweildauer des Fluids in den Rohren des Rohrbündels bewirken. Zudem wird damit eine gleichmäßigere Temperaturverteilung im die einzelnen Rohre durchströmenden Fluid bewirkt, wenn diese Rohre zum Temperaturaustausch von einem Fluid einer anderen Temperatur umströmt werden.

Insbesondere kann ein erfindungsgemäßes Einspritzelement dazu eingerichtet sein, in einem Rohrbündelwärmetauscher zum Kühlen von Treibstoff verwendet zu werden.

Ein erfindungsgemäßer Rohrbündelwärmetauscher dient einem Kühlen von Treibstoff für ein Triebwerk. Er weist ein mehrere Rohre umfassendes Rohrbündel zur Durchleitung eines Kühlstroms sowie einen das Rohrbündel mindestens teilweise umgebendes Außenrohr zur Durchleitung des Treibstoffs auf. Zudem umfasst der Rohrbündelwärmetauscher ein erfindungsgemäßes Einspritzelement gemäß einer der in dieser Schrift offenbarten Ausführungsformen sowie eine Zuleitung zum Einspritzelement. Die Durchlässe des Einspritzelements führen jeweils von der Zuleitung in eines der Rohre des Rohrbündels (und verengen sich in dieser Richtung jeweils kegelartig).

Ein derartiger Rohrbündelwärmetauscher ermöglicht infolge der kegelartigen Verengungen ein kontrolliertes Einspritzen des Kühlstroms, insbesondere eine Druckentlastung und eine definierte Einspritzmenge punktgenau an der jeweils engsten Stelle.

Gemäß einer bevorzugten Ausführungsform eines erfindungsgemäßen Rohrbündelwärmetauschers verläuft eine zentrale Achse der Durchlässe jeweils schräg durch das Einspritzelement und ist eine engste Stelle der Durchlässe jeweils von einer zentralen Längsachse des jeweiligen Rohrs beabstandet angeordnet. Bezogen auf einen Querschnitt eines Rohrs, in das der jeweilige Durchlass führt, ist die engste Stelle somit jeweils außermittig angeordnet. Dadurch kann eine vorteilhafte Verwirbelung bzw. ein Drall im Kühlstrom erzeugt werden.

Vorteilhaft ist eine Ausführungsform, bei der die Rohre des Rohrbündels jeweils einen Innendurchmesser D aufweisen, der 7 bis 30 mal so groß ist wie der Durchmesser der Durchlässe b des Einspritzelements jeweils an ihrer engsten Stelle. Gemäß einem speziellen Ausführungsbeispiel weisen die Rohre einen Innendurchmesser D auf, der in einem Bereich von 3,6mm bis 3,8 mm liegt; die Durchmesser der Durchlässe an ihrer engsten Stelle liegt dabei vorzugsweise im Bereich von 0,1 mm bis 0,6 mm, bevorzugter im Bereich von 0,2 mm bis 0,4 mm.

Gemäß einer vorteilhaften Ausführungsform ist das Einspritzelement mindestens teilweise als Scheibe ausgebildet, das vorzugsweise eine im Wesentlichen gleichmäßige Dicke aufweist, deren Wert in einem Bereich zwischen der Hälfte und dem Anderthalbfachen eines Innendurchmessers der Rohre des Rohrbündels liegt.

Gemäß einer vorteilhaften Ausführungsform ist ein erfindungsgemäßer Rohrbündelwärmetauscher dazu eingerichtet, ein Flüssiggas (das z.B. Flüssigwasserstoff oder Flüssigsauerstoff umfassen kann) durch die Zuleitung zum Einspritzelement zu leiten und im Einspritzelement eine Druckabsenkung auf Verdampfungsdruckniveau herzustellen.

Auf diese Weise kann eine Kühlung des Treibstoffs durch Erzeugen eines Verdampfungsprozesses im Flüssiggas bewirkt werden. Die kegelartige Verengung ermöglicht dabei eine kontrollierte Druckreduzierung und Verdampfung an der Einspritzblende (der engsten Stelle) der jeweiligen Durchlässe. So kann die Effizienz der Kühlung verbessert und insbesondere eine unvollständige Verdampfung vermieden werden, die gerade bei einem Verzicht auf einen Kompressionskreislauf (und somit bei einem verlustbehafteten Ablassen des teilverdampften Fluids) eine nachteilige Energieverwertung bedeutet.

Insbesondere kann bei einem erfindungsgemäßen Rohrbündelwärmetauscher die Zuleitung zum Einspritzelement an einen druckbeaufschlagten Flüssiggastank angeschlossen sein. An ihrem dem Einspritzelement abgewandten Ende können die Rohre des Rohrbündels in eine Umgebung mit niedrigerem Druck führen (bei Verwendung des Rohrbündelwärmetauschers in einer Rakete z.B. in das Weltall).

Gemäß einer vorteilhaften Ausführungsvariante ist ein erfindungsgemäßer Rohrbündelwärmetauscher als Druckbehälter ausgelegt. Vorzugsweise ist der Wärmetauscher dabei dazu eingerichtet, einen im Tank herrschenden Druck im Außenrohr zumindest im Wesentlichen aufrecht zu erhalten.

Ein erfindungsgemäßes Versorgungssystem für ein Triebwerk mit Treibstoff umfasst einen Tank und mindestens einen Rohrbündelwärmetauscher gemäß einem der in dieser Schrift offenbarten Ausführungsformen. Das Versorgungssystem umfasst weiterhin mindestens eine Leitung, die vom Tank zum Außenrohr des mindestens einen Rohrbündelwärmetauschers und/oder die vom Außenrohr des mindestens einen Rohrbündelwärmetauschers zum Triebwerk führen kann. Durch eine (oder mehrere) derartige Leitung(en) kann somit der zu kühlende Treibstoff geleitet werden. Der Tank enthält in diesem Fall vorzugsweise mindestens einen Teil des Treibstoffs. Alternativ oder zusätzlich kann die mindestens eine Leitung vom Tank zur Zuleitung (zum Einspritzelement) und/oder vom Rohrbündel in eine Umgebung des Versorgungssystems führen; diese Leitung(en) können dabei dazu dienen, den Kühlstrom zu führen. Der Tank kann in diesem Fall vorzugsweise den Treibstoff enthalten (so dass der Kühlstrom aus einem Teil des Treibstoff generiert werden kann) oder ein separates (ggf. anderes) Flüssiggas zur Erzeugung eines Kühlstroms.

Ein erfindungsgemäßes Verfahren dient einem Kühlen von Treibstoff für ein Triebwerk. Dabei werden der Treibstoff durch ein Außenrohr eines Rohrbündelwärmetauschers geleitet sowie ein Flüssiggas durch eine Zuleitung bis an ein erfindungsgemäßes Einspritzelement für ein im Inneren des Außenrohrs des Rohrbündelwärmetauschers angeordnetes Rohrbündel. Der Treibstoff bzw. das Flüssiggas können jeweils beispielsweise Flüssigwasserstoff und/oder Flüssigsauerstoff umfassen. Das Flüssiggas kann insbesondere einen Teil des durch das Außenrohr geleiteten Treibstoffs und/oder weiteren aus einem (anderen) Tank herausgeleiteten Treibstoff umfassen. Durch Hindurchleiten des Flüssiggases durch sich jeweils kegelartige verengende Durchlässe des Einspritzelements und in Rohre des Rohrbündels hinein wird weiterhin mindestens ein Teil des Flüssiggases in ein Verdampfungsgas umgewandelt, das dann aus dem Rohrbündel abgeführt wird.

Das Verdampfungsgas im Rohrbündel wirkt dabei als Kühlmedium auf den Treibstoff im Außenrohr. Mit der Durchleitung durch die sich kegelartig verengenden Durchlässe und deren als Einspritzblende wirkende engste Stelle können die Druckentlastung und die Einspritzmenge genau positioniert und damit insbesondere eine vorzeitige und/oder unvollständige Umwandlung und/oder Verteilung des Kühlmediums auf die Rohre verhindert werden.

Das Abführen des Verdampfungsgases kann beispielsweise in eine Umgebung des Rohrbündelwärmetauschers bzw. eines durch das Triebwerk angetriebenen Fahrzeugs oder Flugkörpers hinein erfolgen.

Gemäß einer vorteilhaften Ausführungsform erfolgt das Kühlen gemäß einem erfindungsgemäßen Verfahren außerhalb der Erdatmosphäre. Insbesondere kann das Abführen des Verdampfungsgases in diesem Fall in das Vakuum des Weltraums erfolgen. Der im Rohr herrschende (gegenüber dem Druck im Flüssiggas herrschende) reduzierte Druck, der der Druckentlastung am Einspritzelement und der resultierenden Verdampfung zugrunde liegt, ergibt sich vorzugsweise aus einer Verbindung des jeweiligen Rohrinneren mit dem Vakuum, die beispielsweise durch eine kritische Drossel eingestellt sein bzw. werden kann.

Ein erfindungsgemäßer Rohrbündelwärmetauscher kann gemäß bevorzugten Ausführungsformen als Gegenstrom-, Gleichstrom- oder Kreuzstromrekuperator ausgebildet sein, also dazu eingerichtet, den zu kühlenden Treibstoff und den Kühlstrom (im Wesentlichen) in entgegengesetzten Richtungen, in die gleiche Richtung oder in einander (ein- oder mehrfach) kreuzenden Richtungen durchzuleiten.

Entsprechend kann ein erfindungsgemäßes Verfahren ein Durchleiten des Kühlstroms durch die Nebenstromleitung in dieselbe Richtung umfassen, in die der Treibstoff durch die Hauptstromleitung geleitet wird, in dazu entgegengesetzte Richtung oder in die Hauptstromrichtung (ein- oder mehrfach) kreuzende Richtung(en).

Eine entgegengesetzte Richtung von Kühlstrom und zu kühlendem Treibstoff bewirkt eine besonders vorteilhafte Kühlung. Gleiche Richtungen dagegen können ggf. einen kompakten und vereinfachten Aufbau des Wärmetauschers ermöglichen. Analog können gekreuzte Richtungen einen vorteilhaften Gesamtaufbau und - gerade bei Mehrfachkreuzung - eine große Durchlaufdauer ermöglichen, was einen entsprechend guten Wärmeaustausch gewährleisten kann.

Gemäß einer vorteilhaften Ausführungsform eines erfindungsgemäßen Verfahrens umfasst das Umwandeln des Flüssiggases in ein Verdampfungsgas ein Erzeugen von Verwirbelungen bzw. Drall im Verdampfungsgas, indem das Verdampfungsgas (vorzugsweise in einem Eintrittsbereich in die Rohre) auf eine jeweilige Innenwand der Rohre des Rohrbündels gerichtet wird. Dieses Richten kann insbesondere dadurch bewirkt werden, dass - wie oben beschrieben - eine jeweilige zentrale Achse der Durchlässe jeweils schräg durch das Einspritzelement führt. Vorteilhaft sind dabei die oben genannten Winkel von vorzugsweise 75° bis 87° zwischen der jeweiligen zentralen Achse und der Oberfläche des Einspritzelements, zu der hin sich die Durchlässe verengen.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: ein erfindungsgemäßes Versorgungssystem mit Rohrbündelwärmetauscher gemäß einer Ausführungsform der vorliegenden Erfindung in einem Querschnitt;
- Figur 2:: eine Detailansicht eines Abschnitts eines erfindungsgemäßen Rohrbündelwärmetauschers mit Einspritzelement; und
- Figur 3:: eine Detailansicht eines Durchlasses eines erfindungsgemäßen Einspritzelements.

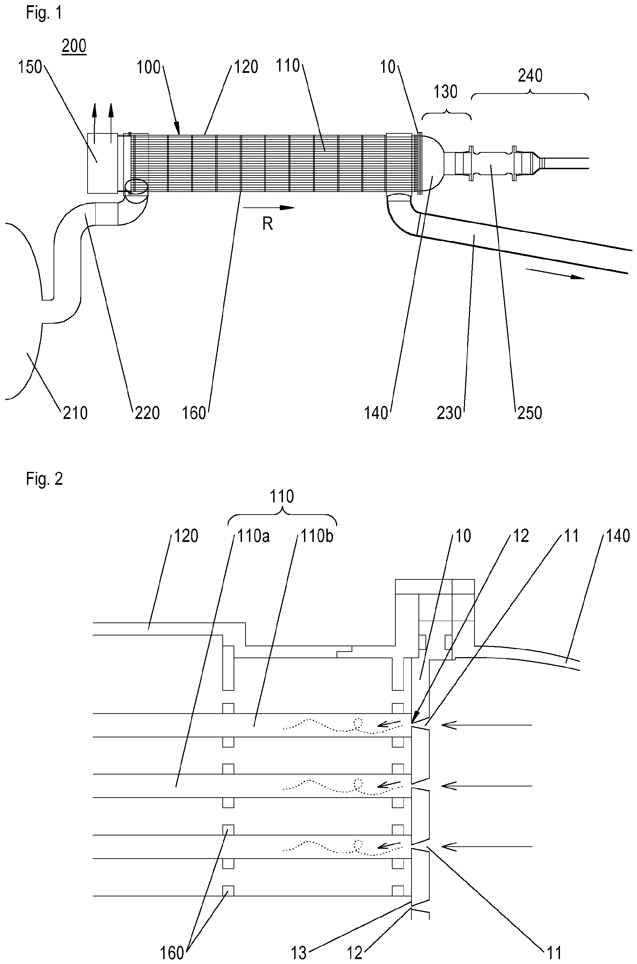

In Figur 1 ist ein exemplarisches Versorgungssystem 200 für ein Triebwerk gemäß der vorliegenden Erfindung schematisch dargestellt. Das Versorgungssystem umfasst einen Tank 210, der dazu eingerichtet ist, Treibstoff zu enthalten, sowie einen exemplarischen erfindungsgemäßen Rohrbündelwärmetauscher 100. Zudem umfasst das Versorgungssystem 200 eine Leitung 220 vom Tank zum Rohrbündelwärmetauscher 100. Mittels der Leitung 220 kann vorzugsweise im Tank enthaltener Treibstoff zur Kühlung in den Rohrbündelwärmetauscher 100 geführt werden, wo es vorzugsweise in der Durchflussrichtung R durch ein Außenrohr 120 strömt, in dem ein Rohrbündel 110 angeordnet ist.

Weiterhin umfasst das gezeigte Versorgungssystem 200 eine Leitung 230 vom Rohrbündelwärmetauscher 120 zum Triebwerk, die dazu eingerichtet ist, den eingeleiteten Treibstoff nach seiner Kühlung weiterzuleiten.

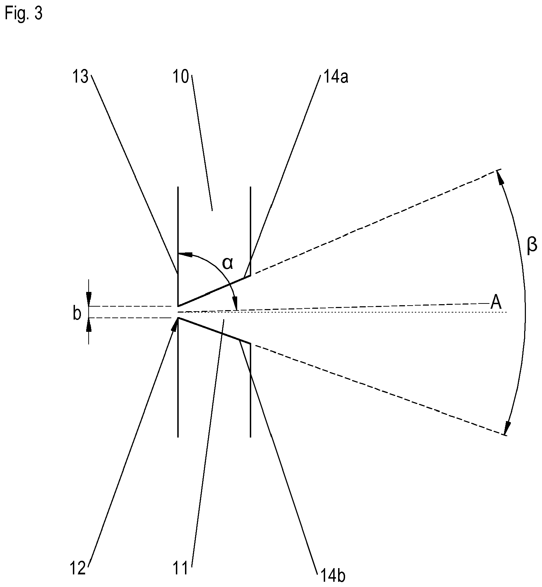

Schließlich umfasst das Versorgungssystem 200 der Figur 1 eine Leitung 240, die zur Zuleitung zu einem exemplarischen erfindungsgemäßen Einspritzelement 10 im Rohrbündelwärmetauscher führt; das Einspritzelement wird weiter unten mit Bezug zu den Figuren 2 und 3 näher beschrieben.

Die Leitung 240 verbindet vorzugsweise die Zuleitung 130 des Rohrbündelwärmetauschers 100 mit einem Tank mit Flüssiggas. Dieser Tank kann der Tank 210 sein (das Flüssiggas ist dann also ein Teil des Treibstoffs) oder ein anderer Tank, der ebenfalls Teil des Versorgungssystems sein kann und ggf. ein vom Treibstoff im Tank 210 verschiedenes Flüssiggas enthalten kann. Über ein Ventil 250 kann das Einleiten von Flüssiggas in den Rohrbündelwärmetauscher 100 gesteuert werden.

Die Zuleitung 130 zum Einspritzelement 10 umfasst eine Einspritzkuppel 140, von der aus zugeleitetes Flüssiggas durch das Einspritzelement 10 in die Rohre des Rohrbündels 110 gelangen kann. Dabei wird das Flüssiggas vorzugsweise auf oder unterhalb Verdampfungsniveau druckentlastet. Das entstehende Verdampfungsgas wird als Kühlstrom durch die Rohre des Rohrbündels hindurch geleitet, die ein Material mit hoher Wärmeleitfähigkeit umfassen (z.B. Metall) und so einen Temperaturaustausch mit einem das Rohrbündel im Außenrohr 120 umströmenden (und zu kühlenden) Treibstoff ermöglichen. Die Rohre werden dabei durch eine Mehrzahl an Halterungen 160 gehalten, die zugleich als Prallbleche für den Treibstoff dienen. Der Rohrbündelwärmetauscher 100 ist im gezeigten Beispiel als Gegenstromrekuperator ausgebildet, der Kühlstrom läuft also in den Rohren des Rohrbündels der Durchflussrichtung R des zu kühlenden Treibstoffs entgegen.

Durch einen Dampfauslass 150 gelangt der Kühlstrom in eine Umgebung des Rohrbündelwärmetauschers, beispielsweise in das Vakuum des Weltraums; in diesem Fall ermöglicht insbesondere die mittels des Dampfauslasses 150 bestehende Verbindung zur Umgebung das Absenken des Drucks beim Eintritt des Flüssiggases in die Rohre des Rohrbündels.

Figur 2 zeigt in einer Schnittdarstellung einen Ausschnitt eines Einspritzelements 10: Ein derartiges Einspritzelement dient einem Aufteilen eines Flüssiggases (das - wie durch Pfeile gekennzeichnet - in die Einspritzkuppel 140 eingeleitet wird) in eine Mehrzahl an Fluidströmen, beispielsweise jeweils in Rohren 110a, 110b eines Rohrbündels 110 in einem Rohrbündelwärmetauscher, wie er in Figur 1 gezeigt ist. Wie oben erwähnt werden die Rohre durch eine Mehrzahl an Halterungen 160 gehalten, die zugleich als Prallbleche für den Treibstoff dienen, den sie somit für einen verbesserten Temperaturaustausch verwirbeln.

Das Einspritzelement 10 umfasst im in der Figur 2 gezeigten Beispiel einen scheibenförmigen Bereich, durch den hindurch eine Mehrzahl an Durchlässen 11 führt, die sich zu einer Seite des Einspritzelements (in der Figur 2: zur linken Seite) hin jeweils kegelartig verengen. An der dem Rohrbündel 110 zugewandten Oberfläche 13 des Einspritzelements haben die Durchlässe 10 dadurch jeweils eine engste Stelle 12. An dieser Stelle führt eine Druckentlastung zur Verdampfung mindestens eines Teils des Flüssiggases und damit zu einer Temperaturverringerung, so dass sich im Rohrbündel ein Verdampfungsgas als Kühlstrom bildet (der mehrere Teilströme in den einzelnen Rohren umfasst; in der Figur sind diese durch die gepunkteten Linien angedeutet).

Die Durchlässe 11 führen jeweils leicht schräg durch das Einspritzelement 10 und sind gegenüber einem Querschnitt des jeweiligen Rohrs, in das sie führen, außermittig angeordnet; die engste Stelle 12 ist somit von einer zentralen Längsachse des jeweiligen Rohrs beabstandet angeordnet. So bilden sich - wie in der Figur angedeutet - Verwirbelungen (bzw. Drall) im Kühlstrom, die einen Kühleffekt verbessern.

In der Figur 3 sind am Beispiel eines (in einer Schnittdarstellung gezeigten) Durchlasses 11 Einzelheiten eines vorteilhaften erfindungsgemäßen Einspritzelements 10 verdeutlicht: Der Durchlass 11 weist an seiner Oberfläche 13 als Einspritzblende eine engste Stelle 12 auf, zu der hin er sich kegelartig verengt. Vorteilhaft ist eine Ausführungsform, bei der ein Innendurchmesser D der Rohre 7 bis 30 mal so groß ist wie ein Durchmesser b der engsten Stelle 12. Gemäß einem speziellen Ausführungsbeispiel liegt der Durchmesser b der engsten Stelle im Bereich von 0,1 mm bis 0,6 mm liegt, bevorzugter im Bereich von 0,2mm bis 0,4mm; der Innendurchmesser der Rohre liegt dabei vorzugsweise in einem Bereich von 3,6 bis 3,8 mm.

Der Durchlass 11 weist eine zentrale Achse A auf einander gegenüberliegende Wandabschnitte 14a, 14b auf, die mit der Achse A in der gezeigten Querschnittsebene liegen. Die Wandabschnitte laufen dabei in einem Winkel β aufeinander zu, der somit einen Öffnungswinkel eines zugrundeliegenden Kegels darstellt. Vorzugsweise liegt der Winkel β in einem Bereich von 20° bis 50°, bevorzugter von 25° bis 40°.

Die zentrale Achse A verläuft schräg durch das Einspritzelement 10; sie verläuft insbesondere geneigt (nicht senkrecht) zur Oberfläche 13 des Einspritzelements (und damit vorzugsweise nicht parallel zu einem zugeordneten Rohr eines Rohrbündels, in das der Durchlass 11 vorzugsweise mündet). Der Schnittwinkel α zwischen einer ebenen Oberfläche 13 des Einspritzelements und der zentralen Achse A liegt vorzugsweise in einem Bereich von 75° bis 87°. Dadurch können - wie oben erläutert - vorteilhafte Verwirbelungen bzw. ein vorteilhafter Drall in einem hindurchgeleiteten Kühlstrom erzeugt werden.

### Bezugszeichen:

- 10: Einspritzelement
- 11: Durchlass
- 12: engste Stelle (Einspritzblende)
- 13: Oberfläche des Einspritzelements
- 14a, 14b: Wandabschnitte des Durchlasses

- 100: Rohrbündelwärmetauscher
- 110: Rohrbündel
- 110a, 110b: Rohr des Rohrbündels
- 120: Außenrohr
- 130: Zuleitung zum Einspritzelement
- 140: Einspritzkuppel
- 150: Dampfauslass
- 160: Halterung und Prallblech

- 200: Versorgungssystem
- 210: Tank
- 220: Leitung vom Tank zum Rohrbündelwärmetauscher
- 230: Leitung vom Rohrbündelwärmetauscher zum Triebwerk
- 240: Leitung zur Zuleitung zum Einspritzelement
- 250: Ventil

- A: zentrale Achse eines Durchlasses
- b: Durchmesser der Einspritzblende
- R: Durchflussrichtung
- α: Neigungswinkel der zentralen Achse zur Oberfläche des Einspritzelements
- β: Winkel zwischen Wandabschnitten eines Durchlasses

## Patentansprüche

1. Einspritzelement (10) für einen Rohrbündelwärmetauscher, das zum Aufteilen eines Fluidstroms in eine Mehrzahl an Fluidströmen eine Mehrzahl an Durchlässen (11) aufweist, die sich zu einer Seite des Einspritzelements hin jeweils kegelartig verengen,
**dadurch gekennzeichnet, dass**
eine jeweilige zentrale Achse (A) der Durchlässe jeweils schräg durch das Einspritzelement (10) verläuft.

2. Einspritzelement gemäß Anspruch 1, das zumindest einen scheibenförmigen Bereich umfasst, durch den hindurch die Durchlässe (11) führen.

3. Einspritzelement gemäß einem der Ansprüche 1 oder 2, wobei die Durchlässe an ihrer engsten Stelle (12) jeweils einen Durchmesser (b) im Bereich von 0,1 mm bis 0,6 mm haben, bevorzugter im Bereich von 0,2mm bis 0,4mm.
und/oder wobei gegenüberliegende Wandabschnitte (14a, 14b) der sich jeweils kegelartig verengenden Durchlässe in einer Querschnittsebene in einem Winkel (β) von 20° bis 50°, bevorzugter von 25° bis 40° aufeinander zulaufen.

4. Rohrbündelwärmetauscher (20) zum Kühlen von Treibstoff für ein Triebwerk, wobei der Rohrbündelwärmetauscher aufweist:
ein mehrere Rohre (110a, 110b) umfassendes Rohrbündel (110) zur Durchleitung eines Kühlstroms sowie ein das Rohrbündel (110) mindestens teilweise umgebendes Außenrohr (120) zur Durchleitung des Treibstoffs,
ein Einspritzelement (10) gemäß einem der vorhergehenden Ansprüche
und eine Zuleitung (130) zum Einspritzelement,
wobei die Durchlässe (11) des Einspritzelements jeweils von der Zuleitung in eines der Rohre (110a, 110b) des Rohrbündels führen.

5. Rohrbündelwärmetauscher gemäß Anspruch 4, der dazu eingerichtet ist, ein Flüssiggas durch die Zuleitung (130) zum Einspritzelement (10) zu leiten und im Einspritzelement eine Druckabsenkung auf oder unterhalb Verdampfungsdruckniveau herzustellen.

6. Versorgungssystem (200) für eine Triebwerk mit Treibstoff, das einen Tank (210) und mindestens einen Rohrbündelwärmetauscher (100) gemäß einem der Ansprüche 4 oder 5 umfasst sowie mindestens eine Leitung
vom Tank zum Außenrohr (120) des mindestens einen Rohrbündelwärmetauschers
und/oder vom Außenrohr (120) des mindestens einen Rohrbündelwärmetauschers zum Triebwerk
und/oder vom Tank zur Zuleitung (130) zum Einspritzelement und/oder vom Rohrbündel (110) in eine Umgebung des Versorgungssystems.

7. Verfahren zum Kühlen von Treibstoff für ein Triebwerk, wobei das Verfahren umfasst:
ein Durchleiten des Treibstoffs durch ein Außenrohr (120) eines Rohrbündelwärmetauschers (100);
ein Zuleiten eines Flüssiggases durch eine Zuleitung (130) bis an ein Einspritzelement (10) für ein im Inneren des Außenrohrs (120) angeordnetes ein Rohrbündel (110) des
Rohrbündelwärmetauschers, wobei das Einspritzelement gemäß einem der Ansprüche 1 bis 3 ausgebildet ist;
ein Umwandeln mindestens eines Teils des Flüssiggases in ein Verdampfungsgas durch Hindurchleiten des Flüssiggases durch sich jeweils kegelartige verengende Durchlässe (11) des Einspritzelements in Rohre (110a, 110b) des Rohrbündels hinein; und
ein Abführen des Verdampfungsgases aus dem Rohrbündel.

8. Verfahren gemäß Anspruch 7, wobei das Flüssiggas einen Teil des durch das Außenrohr (120) geleiteten Treibstoffs und/oder weiteren aus einem Tank herausgeleiteten Treibstoff umfasst.

9. Verfahren gemäß einem der Ansprüche 7 oder 8, wobei das Umwandeln ein Erzeugen von Verwirbelungen und/oder Drall im Verdampfungsgas durch Richten des Verdampfungsgases auf eine jeweilige Innenwand der Rohre (110a,110b) des Rohrbündels umfasst.

## Claims

1. Injection element (10) for a tube bundle heat exchanger which comprises a plurality of passageways (11) that each narrow in a cone-like manner towards one side of the injection element for dividing a fluid flow into a plurality of fluid flows,
**characterized in that**
a central axis (A) of each of the passageways respectively runs obliquely through the injection element (10).

2. Injection element according to Claim 1 that comprises at least one disc-shaped region, through which the passageways (11) run.

3. Injection element according to any one of Claims 1 or 2, wherein, at their narrowest point, the passageways (12) each have a diameter (b) within the range of 0.1 mm to 0.6 mm, more preferably within the range of 0.2 mm to 0.4 mm,
and/or wherein opposite wall sections (14a, 14b) of the cone-like narrowing passageways run towards each other at an angle (β) of 20° to 50° on a cross-sectional plane, preferably running towards each other at an angle of 25° to 40°.

4. Tube bundle heat exchanger (20) for cooling fuel for an engine, wherein the tube bundle heat exchanger comprises:
a tube bundle (110) comprises a plurality of tubes (110a, 110b) for the transport of a cooling current and an outer tube (120) for fuel transport, which is at least partially surrounding the tube (110),
an injection element (10) according to one of the preceding claims
and a supply line (130) for the injection element,
wherein the passageways (11) of the injection element each lead from the supply line into one of the tubes (110a, 110b) of the tube bundle.

5. Tube bundle heat exchanger according to Claim 4, which is set up to guide a liquefied gas through the supply line (130) to the injection element (10) and to create a pressure drop in the injection element that is at or below the evaporation pressure level.

6. Supply system (200) for an engine with fuel that comprises a tank (210) and at least one tube bundle heat exchanger (100) according to one of the Claims 4 or 5,
as well as at least one line from the tank to the outer tube (120) of at least one tube bundle heat exchanger and/or from the outer tube (120) of at least one tube bundle heat exchanger to the engine
and/or from the tank to the supply line (130) to the injection element and/or from the tube bundle (110) into a surrounding area of the supply system.

7. Method for cooling fuel for an engine, wherein the method entails:
transporting of the fuel through an outer tube (120) of a tube bundle heat exchanger (100);
supplying of a liquefied gas through a supply line (130) to an injection element (10) for a tube bundle (110) of the tube bundle heat exchanger arranged inside the outer tube (120), wherein the injection element is designed according to one of the Claims 1 to 3;
converting of at least one part of the liquefied gas into an evaporation gas by passing the liquefied gas through conical cone-like narrowing passageways (11) of the injection learner into tubes (110a, 110b) of the tube bundle; and
conveying of the evaporation gas out the tube bundle.

8. The method referred to in Claim 7, wherein the liquefied gas comprises a part of the fuel guided through the outer tube (120) and/or other fuel guided out of a tank.

9. Method according to any one of Claims 7 or 8, wherein the conversion entails generating turbulences and/or a swirl in the evaporation gas by directing the evaporation gas onto a respective inner wall of the tubes (110a, 110b) of the tube bundle.

## Revendications

1. Elément d'injection (10) pour un échangeur de pluralité de passages (11) pour répartir un écoulement de fluide, qui se rétrécissent respectivement en forme de cône vers un côté de l'élément d'injection
**caractérisé en ce qu'**
un axe central respectif (A) des passages passe respectivement de façon inclinée à travers l'élément d'injection (10).

2. Elément d'injection selon la revendication 1, qui comprend au moins une zone en forme de disque à travers laquelle passent les passages (11).

3. Elément d'injection selon l'une quelconque des revendications 1 ou 2, sachant que les passages possèdent respectivement à leur emplacement le plus étroit (12) un diamètre (b) de l'ordre de 0,1 mm à 0,6 mm, de préférence de l'ordre de 0,2 mm à 0,4 mm
et/ou, sachant que des sections de paroi opposées (14a, 14b) des passages se rétrécissant respectivement en forme de cône convergent l'une vers l'autre dans un plan transversal en formant un angle (β) de 20° à 50°, de préférence de 25° à 40°.

4. Echangeur de chaleur à faisceau tubulaire (20) de refroidissement de carburant pour un groupe propulseur, sachant que l'échangeur de chaleur à faisceau tubulaire comporte :
un faisceau tubulaire (110) comprenant plusieurs tubes (110a, 110b) pour faire passer un flux réfrigérant ainsi qu'un tube extérieur (120) entourant au moins en partie le faisceau tubulaire (110) pour faire passer le carburant,
un élément d'injection (10) selon l'une quelconque des revendications précédentes,
et une conduite d'alimentation (130) pour l'élément d'injection,
sachant que les passages (11) de l'élément d'injection conduisent respectivement de la conduite d'alimentation à un des tubes (110a, 110b) du faisceau tubulaire.

5. Echangeur de chaleur à faisceau tubulaire selon la revendication 4, qui est agencé pour diriger un gaz liquéfié à travers la conduite d'alimentation (130) vers l'élément d'injection (10) et établir dans l'élément d'injection une baisse de pression au niveau ou en dessous du niveau de pression d'évaporation.

6. Système d'alimentation (200) pour un groupe propulseur avec du carburant, qui comprend un réservoir (210) et au moins un échangeur de chaleur à faisceau tubulaire (100) selon l'une quelconque des revendications 4 ou 5 ainsi qu'au moins une conduite
du réservoir au tube extérieur (120) d'au moins un échangeur de chaleur à faisceau tubulaire et/ou du tube extérieur (120) d'au moins un échangeur de chaleur à faisceau tubulaire vers le groupe propulseur
et/ou du réservoir vers la conduite d'alimentation (130) pour l'élément d'injection
et/ou du faisceau tubulaire (110) dans un environnement du système d'alimentation.

7. Procédé de refroidissement de carburant pour un groupe propulseur, sachant que le procédé comprend :
un passage du carburant à travers un tube extérieur (120) d'un échangeur de chaleur à faisceau tubulaire (100),
une alimentation d'un gaz liquéfié par une conduite d'alimentation (130) jusqu'à un élément d'injection (10) pour un faisceau tubulaire (110) disposé à l'intérieur du tube extérieur (120) de l'échangeur de chaleur à faisceau tubulaire, sachant que l'élément d'injection est constitué selon l'une quelconque des revendications 1 à 3,
une transformation d'au moins une partie du gaz liquéfié en un gaz d'évaporation en faisant traverser le gaz liquéfié à travers les passages (11) se rétrécissant respectivement en forme de cône de l'élément d'injection dans les tubes (110a, 110b) du faisceau tubulaire,
et
une évacuation du gaz d'évaporation hors du faisceau tubulaire.

8. Procédé selon la revendication 7, sachant que le gaz liquéfié comprend une partie du carburant dirigé à travers le tube extérieur (120) et/ou un autre carburant évacué d'un réservoir.

9. Procédé selon l'une quelconque des revendications 7 ou 8, sachant que la transformation comprend une production de tourbillonnements et/ou de turbulence dans le gaz d'évaporation en orientant le gaz d'évaporation sur une paroi intérieure respective des tubes (110a, 110b) du faisceau tubulaire.
